# EUROPEAN PATENT APPLICATION

(11) **EP 2 637 282 A1**
(43) Date of publication of application: **11.09.2013**
(21) Application number: 12162697.2
(22) Date of filing: 30.03.2012
(51) Int. Cl.: H02J 7/00

(54) **Discharge circuit**

(30) Priority: 08.03.2012 CN 201210059445
(71) Applicant: Hong Fu Jin Precision Industry (ShenZhen) Co., Ltd., Shenzhen City, Guangdong 518109 (CN); Hon Hai Precision Industry Co., Ltd., New Taipei City (TW)
(72) Inventor: Ma, bin-Song, Shenzhen City, Guangdong Province (CN)
(74) Representative: Gray, John James

(57) **Abstract**

A discharge circuit for increasing discharge time of battery includes a discharging IC and a delay discharge circuit. When the discharging IC detects any voltage input, a minimum operating voltage of the discharging IC is set to 6.3V, when the discharging IC detects no voltage input, the minimum operating voltage of the discharging IC is set to 5.5 V. The delay discharge circuit is connected with a system voltage via a first current-limiting resistance, to make the discharging IC unable to detect any voltage input when only a battery is used as power source, thereby the minimum operating voltage of the discharging IC is set to 5.5V.

## Description

### BackGround

The present disclosure relates to discharge circuits, and more particularly to a discharge circuit for effectively increasing discharge time of battery.

### 2. Description of Related Art

Many portable electronic products, such as portable DVD players, mobile phones, MP3 and MP4 players and the like, use battery as power source. However, discharge time of the battery is very limited, and an increase in the discharge time of the battery is really required.

### BRIEF DESCRIPTION OF THE DRAWINGS

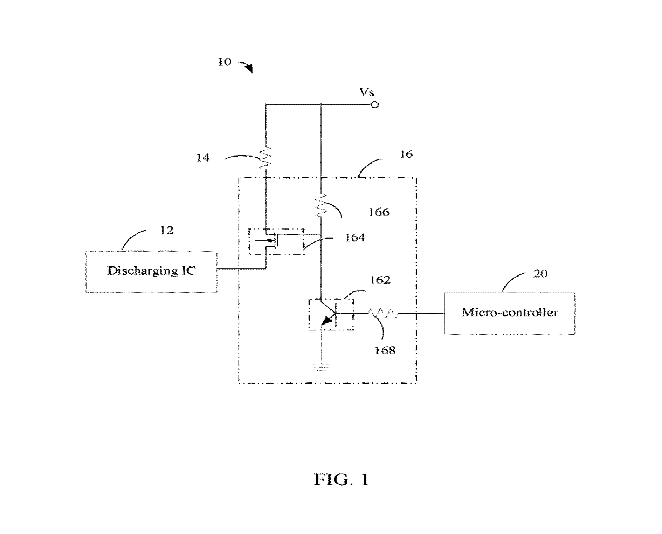

The components in the drawing are not necessarily drawn to scale, the emphasis instead being placed upon clearly illustrating the principles of the discharge circuit for effectively increasing discharge time of battery.

The drawing is a schematic circuit diagram of one embodiment of discharge circuit in accordance with the present disclosure.

### DETAILED DESCRIPTION

The disclosure is illustrated by way of example and not by way of limitation in the figures of the accompanying drawing. It should be noted that references to "an" or "one" embodiment in this disclosure are not necessarily to the same embodiment, and such references mean at least one.

Referring to the drawing, the discharge circuit 10 is applied to portable electronic devices which uses battery as power source. The discharge circuit 10 is connected with a micro-controller 20. The micro-controller 20 is pulled down to a logic low (low voltage) when only the battery is used as the power source and pulled up to a logic high (high voltage) when an adapter (not shown) is used to connect to an external power source (not shown). The discharge circuit 10 includes a discharging IC 12, a first current-limiting resistance 14 and a delay discharge circuit 16.

The discharging IC is connected with a system voltage Vs via the first current-limiting resistance 14. When the discharging IC 12 detects any voltage input, minimum operating voltage of the discharging IC 12 is set to 6.3V; when the discharging IC 12 detects no voltage input, the minimum operating voltage of the discharging IC 12 is set to 5.5 V. The discharging IC 12 is Unicorn20. The discharge circuit 10 uses characteristics of the discharging IC 12 in making the discharging IC 12 unable to detect any voltage input when the battery is used as the power source, thereby the minimum operating voltage of the discharging IC 12 is set to 5.5V, which significantly increases discharge time of the battery.

The delay discharge circuit 16 is connected with the system voltage Vs via the first current-limiting resistance 14. When only the battery is used as the power source, the delay discharge circuit 16 is used to make the discharging IC 12 unable to detect any voltage input, thereby the minimum operating voltage of the discharging IC 12 is set to 5.5V. When the adapter for the external power source is used, the delay discharge circuit 16 allows the discharging IC 12 to detect the voltage input, thereby the minimum operating voltage of the discharging IC 12 is set to 6.3 V.

The delay discharge circuit 16 is connected between the discharging IC 12 and the micro-controller 20. The delay discharge circuit 16 includes a npn transistor 162, a PMOS transistor 164, a second current-limiting resistance 166, and a third current-limiting resistance 168. A base of the npn transistor 162 is connected with the micro-controller 20 via a third current-limiting resistance 168, an emitter of the npn transistor 162 is grounded, a connector of the npn transistor 162 is connected with a gate of the PMOS transistor 16, and connected with the system voltage Vs via the second current-limiting resistance 166. The gate of the PMOS transistor 164 is connected with the second current-limiting resistance 166 and the connector of the npn transistor 162, a source of the PMOS transistor 164 is connected with the system voltage Vs via the first current-limiting resistance 14, and a drain of the the PMOS transistor 164 is connected with the discharging IC 12. The first current-limiting resistance 14 is used to provide current-limiting protection when the PMOS transistor 164 is turned on, and the system voltage Vs provides power to the discharging IC.

When the adapter for the external power source is used, the micro-controller 20 is pulled up to the logic high, and the npn transistor 162 is turned on. The gate of the PMOS transistor 164 is pulled down to a logic low, the PMOS transistor 164 is turned on, and the discharging IC 12 is connected with the system voltage Vs via the first current-limiting resistance 14. The discharging IC 12 can detect voltage input, thereby the minimum operating voltage of the discharging IC 12 is set to 6.3 V. When only battery is used as the power source, the micro-controller 20 is pulled down to a logic low, the npn transistor 162 is turned off, the gate of the PMOS transistor 164 is pulled up to the logic high, and the PMOS transistor 164 is turned off, which disconnects the discharging IC 12 and the first current-limiting resistance 14 from the system voltage Vs. The discharging IC 12 cannot detect any voltage input, thereby the minimum operating voltage of the discharging IC 12 is set to 5.5 V.

Although the current disclosure has been specifically described on the basis of the exemplary embodiment thereof, the disclosure is not to be construed as being limited thereto. Various changes or modifications may be made to the embodiment without departing from the scope and spirit of the disclosure.

## Claims

1. A discharge circuit for increasing discharge time of battery, the circuit comprising:
a discharging IC, wherein when the discharging IC detects any voltage input, a minimum operating voltage of the discharging IC is set to 6.3V, when the discharging IC detects no voltage input, the minimum operating voltage of the discharging IC is set to 5.5 V;
a delay discharge circuit, connected with a system voltage via a first current-limiting resistance, for making the discharging IC not detect any voltage input when only a battery is used as power source, thereby the minimum operating voltage of the discharging IC is set to 5.5V.

2. The discharge circuit of claim 1, wherein the delay discharge circuit is used to make the discharging IC detect any voltage input when only an adapter is used for an external power source, thereby the minimum operating voltage of the discharging IC is set to 6.3V.

3. The discharge circuit of claim 1, wherein the discharge circuit is connected with a micro-controller, the micro-controller is pulled down to a logic low when only the battery is used as the power source and pulled up to a logic high when the adapter is used ; the delay discharge circuit is connected between the discharging IC and the micro-controller, the delay discharge circuit further comprises a npn transistor, and a PMOS transistor, a base of the npn transistor is connected with the micro-controller, an emitter of the npn transistor is grounded, a connector of the npn transistor is connected with a gate of the PMOS transistor, and connected with the system voltage, a gate of the PMOS transistor is connected with the connector of the npn transistor, a source of the PMOS transistor is connected with the system voltage, a drain of the PMOS transistor is connected with the discharging IC, wherein when the adapter is used, the micro-controller is pulled up to the logic high, the npn transistor is turned on, the gate of the PMOS transistor is pulled down to a logic low, the PMOS transistor is turned on, the discharging IC is connected with the system voltage, the discharging IC can detect voltage input, thereby the minimum operating voltage of the discharging IC is set to 6.3V, when only battery is used as the power source, the micro-controller is pulled down to a logic low, the npn transistor is turned off, the gate of the PMOS transistor is pulled up to the logic high, the PMOS transistor is turned off, which makes the discharging IC be separated from the system voltage, the discharging IC does not detect any voltage input, thereby the minimum operating voltage of the discharging IC is set to 5.5V.

4. The discharge circuit of claim 3, wherein the first current-limiting resistance is used to provide current-limiting protection when the PMOS transistor is turned on, and the system voltage provides power to the discharging IC.

5. The discharge circuit of claim 3, wherein the delay discharge circuit further comprises a second current-limiting resistance and a third current-limiting resistance, the base of the npn transistor is connected with the micro-controller via the third current-limiting resistance, the connector of the npn transistor is connected with the system voltage via the second current-limiting resistance, the gate of the PMOS transistor is connected with the connector of the npn transistor.

6. The discharge circuit of claim 1, wherein the discharging IC is Unicorn20.
